(19) Europäisches Patentamt
European Patent Office
Office européen des brevets

(11) EP 2 356 004 B1

(12) EUROPÄISCHE PATENTSCHRIFT

(45) Veröffentlichungstag und Bekanntmachung des Hinweises auf die Patenterteilung:
27.03.2013 Patentblatt 2013/13

(21) Anmeldenummer: 09796983.6

(22) Anmeldetag: 19.11.2009

(51) Int Cl.:
*B60T 8/172* (2006.01)   *G01P 3/50* (2006.01)

(86) Internationale Anmeldenummer:
PCT/EP2009/065449

(87) Internationale Veröffentlichungsnummer:
WO 2010/066550 (17.06.2010 Gazette 2010/24)

(54) **VERFAHREN ZUM ERMITTELN DER GESCHWINDIGKEIT EINES SCHIENENFAHRZEUGES WÄHREND EINES BREMSVORGANGES**

METHOD FOR DETERMINING THE SPEED OF A RAIL VEHICLE DURING A BRAKING APPLICATION

PROCÉDÉ POUR DÉTERMINER LA VITESSE D'UN VÉHICULE SUR RAILS PENDANT UNE OPÉRATION DE FREINAGE

(84) Benannte Vertragsstaaten:
AT BE BG CH CY CZ DE DK EE ES FI FR GB GR HR HU IE IS IT LI LT LU LV MC MK MT NL NO PL PT RO SE SI SK SM TR

(30) Priorität: 10.12.2008 DE 102008061456

(43) Veröffentlichungstag der Anmeldung:
17.08.2011 Patentblatt 2011/33

(73) Patentinhaber: Siemens Aktiengesellschaft
80333 München (DE)

(72) Erfinder:
• RULKA, Wolfgang
81247 München (DE)
• STÜTZLE, Thorsten
90480 Nürnberg (DE)
• VIERECK, Uwe
10249 Berlin (DE)

(56) Entgegenhaltungen:
EP-A1- 1 440 860        EP-A2- 0 967 131
DE-A1- 4 137 546        DE-A1- 19 519 767
DE-A1- 19 729 097

**Beschreibung**

Die Erfindung betrifft ein Verfahren zum Ermitteln der Geschwindigkeit v eines fahrzeuges während eines Bremsvorganges, wobei mittels des Druckes p in einer Bremsvorrichtung die Bremskraft F und mittels der Bremskraft F die Geschwindigkeit v des Fahrzeuges bestimmt wird.

Damit ein Schienenfahrzeug schnell und zuverlässig angehalten werden kann, ist es erforderlich, dass während des Bremsvorganges die momentane Geschwindigkeit bekannt ist. Übliche Methoden zum Bestimmen der Geschwindigkeit, bei denen mit einem Sensor die Drehgeschwindigkeit eines Rades gemessen wird, versagen, wenn ein blockiertes Rad auf der Schiene gleitet.

In der DE 40 24 815 A1 wird vorgeschlagen, dass die Geschwindigkeit geschätzt wird. Dabei wird zunächst aus dem Druck in der Bremsvorrichtung die Bremskraft bestimmt und dann mittels der Bremskraft die Geschwindigkeit des Fahrzeuges bestimmt. Zum Bestimmen des Druckes in der Bremsvorrichtung wird ein Drucksensor benötigt. Eine alternativ mögliche Abschätzung des Druckes gewährleistet keine ausreichende Genauigkeit.

Der Erfindung liegt die Aufgabe zugrunde, ein Verfahren anzugeben zum Ermitteln der Geschwindigkeit v eines Fahrzeuges während eines Bremsvorganges, wobei der für das Ermitteln der Geschwindigkeit v erforderliche Druck p, der in der Bremsvorrichtung herrscht, zuverlässig zu ermitteln ist.

Die Aufgabe wird gemäß der Erfindung dadurch gelöst, dass als Druck p in der Bremsvorrichtung der Druck p in einem Bremszylinder der Bremsvorrichtung nach der idealen Gasgleichung p·V=n·R·T aus dem Volumen V des Bremszylinders, der Molzahl n des Gases im Bremszylinder, der Gaskonstanten R und der Temperatur T bestimmt wird, wobei die Molzahl n aus der Gasmasse m im Bremszylinder bestimmt wird und die Gasmasse m aus dem zum Bremszylinder hin fließenden Gasmassenstrom $\dot{m}$ bestimmt wird, der abhängt vom in der Bremsvorrichtung erzeugten Steuerdruck $p_D$, dem äußeren Luftdruck $p_A$, der Temperatur T und von Systemgrößen, die die Bremsvorrichtung beschreiben, dass aus dem Druck p im Bremszylinder und aus der beaufschlagten Kolbenfläche A des Bremszylinders

nach $p = \dfrac{F}{A}$ die Bremskraft F bestimmt wird und dass aus einer bekannten Anfangsgeschwindigkeit $v_A$ und aus der Beschleunigung a, die aus der Bremskraft F und der Fahrzeugmasse M nach F=M·a bestimmt wird, die momentane Geschwindigkeit v des Fahrzeuges ermittelt wird.

Mit dem Verfahren nach der Erfindung wird der Vorteil erzielt, dass erstmals ein zuverlässiges Modell zum Bestimmen des Druckes in der Bremsvorrichtung zur Verfügung steht, so dass dieser Druck verwendet werden kann, um mittels bekannter physikalischer Gesetze während eines Bremsvorganges eines Fahrzeuges die jeweils aktuelle Geschwindigkeit berechnen zu können. Nur bei der Inbetriebnahme der Bremsvorrichtung muss der aktuelle Druck im Bremszylinder bekannt sein.

Mit dem Verfahren nach der Erfindung wird insbesondere der Vorteil erzielt, dass, unabhängig davon, ob sich die Räder eines Schienenfahrzeuges drehen oder ob die Räder gleiten, ohne aufwändige zusätzliche Sensorik die aktuelle momentane Geschwindigkeit des Schienenfahrzeuges stets zu bestimmen ist. Dadurch, dass die Geschwindigkeit stets sehr genau bekannt ist, kann das Abbremsen des Schienenfahrzeuges sicher und zuverlässig erfolgen.

**Patentansprüche**

1. Verfahren zum Ermitteln der Geschwindigkeit v eines Schienenfahrzeuges während eines Bremsvorganges, wobei mittels des Druckes p in einer Bremsvorrichtung die Bremskraft F und mittels der Bremskraft F die Geschwindigkeit v des Schienenfahrzeugs bestimmt wird, **dadurch gekennzeichnet, dass** als Druck p in der Bremsvorrichtung der Druck p in einem Bremszylinder der Bremsvorrichtung nach der idealen Gasgleichung p·V=n·R·T aus dem Volumen V des Bremszylinders, der Molzahl n des Gases im Bremszylinder, der Gaskonstanten R und der Temperatur T bestimmt wird, wobei die Molzahl n aus der Gasmasse m im Bremszylinder bestimmt wird und die Gasmasse m aus dem zum Bremszylinder hin fließenden Gasmassenstrom $\dot{m}$ bestimmt wird, der abhängt vom in der Bremsvorrichtung erzeugten Steuerdruck $p_D$, dem äußeren Luftdruck $p_A$, der Temperatur T und von Systemgrößen, die die Bremsvorrichtung beschreiben, dass aus dem Druck p im Bremszylinder und aus der beaufschlagten Kolbenfläche A des Bremszylinders nach $p = \dfrac{F}{A}$ die Bremskraft F bestimmt wird und dass aus einer bekannten Anfangsgeschwindigkeit $v_A$ und aus der Beschleunigung a, die aus der Bremskraft F und der Fahrzeugmasse M nach F=M·a bestimmt wird, die momentane Geschwindigkeit v des Schienenfahrzeugs ermittelt wird.

**Claims**

1. Method for determining the speed v of a rail vehicle during a braking application, the brake force F being determined by means of the pressure p in a braking device, and the speed v of the rail vehicle being determined by means of the brake force F, **characterized in that** the pressure p in the braking device is determined as the pressure p in a brake cylinder of the braking device in accordance with the ideal gas equation p·V=n·R·T from the volume V of the brake cylinder, the mole number n of the gas in the brake cylinder, the gas constant R and the temperature T, the mole number n being determined from the gas mass m in the brake cylinder, and the gas mass m being determined from the gas mass flow $\dot{m}$ flowing to the brake cylinder, said gas mass flow depending on the control pressure $p_D$ produced in the braking device, on the external air pressure $p_A$, the temperature T and on system parameters which describe the braking device, **in that** the brake force F is determined from the pressure p in the brake cylinder and from the impacted piston area A of the brake cylinder in accordance with $p=\dfrac{F}{A}$, and **in that** the instantaneous speed v of the rail vehicle is determined from a known initial speed $v_A$ and from the acceleration a which is determined from the brake force F and the vehicle mass M in accordance with F=M·a.

**Revendications**

1. Procédé de détermination de la vitesse v d'un véhicule sur rails pendant une opération de freinage, dans lequel on détermine, au moyen de la pression p dans un dispositif de freinage, la force F de freinage et au moyen de la force F de freinage, la vitesse v du véhicule sur rails, **caractérisé en ce que** l'on détermine comme pression p dans le dispositif de freinage la pression p dans un cylindre de frein du dispositif de freinage suivant l'équation des gaz parfaits p.V=n.R.T à partir du volume V du cylindre de frein, du nombre n de moles du gaz dans le cylindre de frein, de la constante R des gaz et de la température T, dans lequel on détermine le nombre n de moles à partir de la masse m du gaz dans le cylindre de frein et la masse m du gaz à partir du débit massique de gaz allant au cylindre de frein, qui dépend de la pression $p_D$ de commande produite dans le dispositif de frein, de la pression $p_A$ extérieure de l'air, de la température T et de grandeurs de système, qui décrivent le dispositif de freinage, **en ce que** l'on détermine la force F de freinage à partir de la pression p dans le cylindre de frein et à partir de la surface A de piston chargée du cylindre de frein suivant $p=\dfrac{F}{A}$ et **en ce que** l'on détermine à partir d'une vitesse $v_A$ initiale connue et de l'accélération a, qui est déterminée à partir de la force F de freinage et de la masse M du véhicule suivant F=M.a, la vitesse v instantanée du véhicule sur rails.

**EP 2 356 004 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4024815 A1